# EUROPÄISCHE PATENTANMELDUNG

(11) **EP 2 159 469 A1**
(43) Veröffentlichungstag der Anmeldung: **03.03.2010**
(21) Anmeldenummer: 08015006.3
(22) Anmeldetag: 26.08.2008
(51) Int. Cl.: F16M 11/06

(54) **Halte-, Spann- und Positioniersystem für Geräte, Werkstücke und Werkzeuge**

(71) Anmelder: Drees, Jürgen, 57636 Mammelzen (DE)
(72) Erfinder: Drees, Jürgen, 57636 Mammelzen (DE)
(74) Vertreter: Aue, Hans-Peter

(57) **Zusammenfassung**

Ein Halte-, Spann- und Positioniersystem (1) für Geräte, Werkstücke und Werkzeuge besitzt einen mit einer Fußplatte (13) versehenen Tragarm (2), der aus einem beliebig ablängbaren rechteckigen Strangpressprofil (5) besteht, das einen mittigen Steg (6) mit einer zentralen Gewindebohrung (7) aufweist. Vom Steg (6) verlaufen zu den Eck- bzw. Randbereichen des Strangpressprofils (5) weitere Stege (8), wobei zwischen den Stegen (8) Hohlräume (9) gebildet sind und am oberen Ende des Strangpressprofils (5) in dessen Eck- bzw. Randbereichen mindestens zwei beabstandete und hervorstehende Passstifte (10) eingebracht sind. Auf dem oberen Ende des Strangpressprofils (5) ist eine mit Aufnahmeöffnungen für die Passstifte (10) versehene Positioniereinrichtung (3), Konsole, Halterung, Stativ, Drehgelenk (4) oder ähnliche Einrichtung aufsetzbar und mit einer Zentralschraube (24,40) in der zentralen Gewindebohrung (7) des Tragarms (2) befestigbar. Diese Einrichtungen sind gegeneinander austauschbar.

## Beschreibung

Die Erfindung bezieht sich auf ein Halte-, Spann- und Positioniersystem für Geräte, Werkstücke und Werkzeuge und ähnliche Einrichtungen.

Geräte, Werkstücke, Werkzeuge, Maschinenteile und dergleichen, werden häufig über eine Konsole an einem feststehenden Teil, z.B. der Karosserie eines Fahrzeuges, einem Maschinentisch, der Wand eines Gebäudes, einer Tischplatte usw. angeordnet. Zur veränderbaren Positionierung des jeweiligen Gerätes, Werkstücks, Werkzeugs oder Maschinenteils kann deren Halterung gegenüber der Konsole in gewissen Grenzen verschwenkbar angeordnet sein und kann in seiner jeweiligen Verstellposition z.B. mittels einer Schraubverbindung fixiert werden.

Im Allgemeinen dienen Halte-, Positionier- und Spannvorrichtungen dem Positionieren bzw. Einstellen und Verbinden des Gerätes, Werkstückes oder des Werkzeuges in Maschinenelementen, Anlagen, Vorrichtungen und dergleichen während der Bearbeitung. Oft stützen sie nicht nur die Bearbeitungskräfte ab, sondern bringen außerdem das Gerät, Werkstück oder Werkzeug selbsttätig beim Halte-, Positionier- und Spannvorgang in eine bestimmte, zur einwandfreien Bearbeitung erforderliche Lage. Eine Halte-, Positionier- und Spannvorrichtung ist stets für verschiedene Formen und Abmessungen von Werkstücken oder Werkzeugen innerhalb eines bestimmten Bereiches verwendbar.

Solche Halte-, Positionier- und Spannvorrichtungen und auch Kraftspanner sind in verschiedenen Ausführungsformen bekannt. Neben umlaufenden Werkstück- bzw. Werkzeugspannern, wie Spitzen, Spanndorne, Spannzangen, Spannfutter und Teileinrichtungen gibt es auch eine Vielzahl von festen Werkstück- bzw. Werkzeugspannern, z.B. Setzstöcke, Spannstöcke, Magnetspanner, Spanneisen, Spannunterlagen, Kloben usw..

Nachteilig bei diesen Spannvorrichtungen ist deren beschränkte Wirkrichtung, nämlich, dass das Werkstück oder Werkzeug nur in einer Ebene oder Achse gespannt werden kann.

Komplexere Spannvorrichtungen ermöglichen ein Spannen des Werkstückes oder Werkzeuges auch in zwei Ebenen, nämlich in X- und Y-Richtung, manchmal auch räumlich in X-, Y- und Z-Richtung. Allerdings sind solche komplexen Spanngebilde nichts anderes als aus mehreren Spannern kombinierte Vorrichtungen, die dadurch zwangsläufig technisch sehr aufwändig, großvolumig und kostenintensiv sind. Für kleinere und hochpräzise Bearbeitungsschritte und kompaktere Arbeitsmaschinen sind solche komplexen Spannvorrichtungen meist nicht geeignet.

Aus der DE 20 2006 000 908 U1 ist eine Konsole bekannt, die eine Scharniergelenkanordnung umfasst mit einem zylinderförmig ausgebildeten ersten Scharnierelement, welches formschlüssig in einer in dem Tragarm vorgesehenen Lagerbuchse um die erste Scharnierachse schwenkbar angeordnet ist, wobei das erste Scharnierelement im Bereich der Lagerbuchse eine nutenförmige Aufnahme für ein zweites mit dem Gerätehalter verbindbares Scharnierelement besitzt. Das zweite Scharnierelement ist um die zweite durch das erste Scharnierelement hindurch geführte Scharnierachse schwenkbar und durch eine Ausnehmung des ersten Endbereiches des Tragarmes hindurchgeführt. Dabei weist der Tragarm mindestens eine schlitzförmige Ausnehmung auf, die sich von dem unteren Bereich der Lagerbuchse in Richtung auf das zweite Ende des Tragarmes erstreckt, so dass durch ein Zusammendrücken der beiden sich seitlich an die schlitzförmige Ausnehmung anschließenden Schenkel des Tragarmes eine Fixierung des ersten Scharnierelementes durch Klemmung durchführbar ist. Außerdem sind der Schwenkbereich des ersten Scharnierelementes sowie seine Ausgestaltung derart gewählt, dass bei der Fixierung des ersten Scharnierelementes ebenfalls ein Zusammendrücken der beiden, das zweite Scharnierelement umschließenden Schenkel des ersten Scharnierelementes und somit auch eine Fixierung des zweiten Scharnierelementes durch Klemmung erfolgt. Der Tragarm besteht aus einem massiven Metallmaterial.

Nachteilig hierbei ist, dass der Tragarm aus dem vollen Metallmaterial gefräst wird und dadurch aufwändig, teuer und schwer ist. Darüber hinaus ist durch das Vorhandensein der Aufnahme für die Drehgelenkanordnung und die schlitzförmige Ausnehmung zu deren Verspannung der Tragarm an eine feste Länge gebunden.

Zum Positionieren bzw. Einstellen eines Gerätes, Werkstückes bzw. Werkzeuges oder anderen Maschinenteils an der Positionier- bzw. Spannvorrichtung wird häufig die so genannten Shimstechnik angewendet. Diese wird insbesondere in der Ventiltechnik benutzt, um Ventilspiele einzustellen. Hierbei werden Shims, d.h. Metallscheiben oder -platten unterschiedlicher Dicke, gegebenenfalls auch unterschiedlicher Form, verwendet, um die entsprechenden Bauteile der Vorrichtung, des Maschinenteils usw. zu positionieren und/oder einzustellen.

Aus der DE 20 2006 016 392 U1 ist eine Positioniervorrichtung bekannt, bei der das Fußteil eine mittige, im Querschnitt rechteckige Öffnung aufweist, an deren zumindest zwei rechtwinklig zueinander liegenden Seitenflächen jeweils ein Einstellklotz beliebig wählbarer Dicke befestigbar ist. Ein Flanschteil besitzt einen der Form der Öffnung im Fußteil entsprechenden Zapfen mit geringeren Abmessungen als die Öffnung im Fußteil, der in diese Öffnung einsteckbar ist. Zwischen dem Fußteil und dem Flanschteil ist eine Einstellplatte beliebig wählbarer Dicke einsetzbar, die eine zur Öffnung des Fußteils kongruenten Öffnung aufweist. Der Zapfen des Flanschteils ist in der Öffnung des Fußteils mittels eines Befestigungselementes befestigbar.

Vorzugsweise mit Shims und Endmaßen werden die exakten Dicken der Einstellklötze und der Einstellplatte ermittelt. Die Anbringung der Einstellklötze der vorbestimmten und ausgewählten Dicken an den zumindest zwei rechtwinklig zueinander liegenden Seitenflächen der Öffnung im Fußteil bewirkt einerseits eine exakte Maßeinstellung in X-Richtung durch den einen Einstellklotz und anderseits in Y-Richtung durch den anderen Einstellklotz, da dieser rechtwinklig zum Einstellklotz in X-Richtung ausgerichtet ist.

Es ist Aufgabe der Erfindung, ein Halte-, Spann- und Positioniersystem für Geräte, Werkstücke und Werkzeuge und ähnliche Einrichtungen zu schaffen, das einfach und kostengünstig herstellbar, gewichtsmäßig leicht und nach dem Baukastenprinzip beliebig zusammenstellbar ist.

Erfindungsgemäß wird die Aufgabe gelöst durch einen mit einer Fußplatte versehenen Tragarm, der aus einem beliebig ablängbaren rechteckigen Strangpressprofil besteht, das einen mittigen Steg mit einer zentralen Gewindebohrung aufweist, von dem zu den Eck- bzw. Randbereichen des Strangpressprofils weitere Stege verlaufen, zwischen den Stegen Hohlräume gebildet sind und am oberen Ende des Strangpressprofils in dessen Eck- bzw. Randbereichen mindestens zwei beabstandete und hervorstehende Passstifte eingebracht sind, wobei auf dem oberen Ende des Strangpressprofils eine mit Aufnahmeöffnungen für die Passstifte versehene Positioniereinrichtung, Konsole, Halterung, Stativ, Drehgelenk oder ähnliche Einrichtung aufsetzbar und mit einer Zentralschraube in der zentralen Gewindebohrung des Tragarms befestigbar ist und diese Einrichtungen gegeneinander austauschbar sind.

Weitere Merkmale der Erfindung ergeben sich aus den Unteransprüchen.

Demgemäß verlaufen die Stege im Innern des Strangpressprofils über dessen gesamte Länge.

Bei einer vorteilhaften Ausgestaltung der Erfindung sind zwischen der Fußplatte, dem Tragarm und der darauf aufsetzbaren Einrichtung Mittel der Shimstechnik, d.h. Metallscheiben oder -platten unterschiedlicher Dicke, einsetzbar.

Nach einer weiteren Ausbildung der erfindungsgemäßen Lösung ist die Fußplatte mit einer Zentralschraube in der zentralen Gewindebohrung des Tragarms befestigbar.

Mit diesem Halte-, Spann- und Positioniersystem wird ein modulares System nach dem Baukastenprinzip ermöglicht, bei dem eine Positioniereinrichtung, eine Konsole, eine Halterung, ein Stativ, ein Drehgelenk oder eine ähnliche Einrichtung auf den Tragarm aufgesetzt werden kann. Die Befestigung dieser Einrichtung erfolgt mittels einer einzigen Zentralschraube in der zentralen Gewindebohrung des Tragarms. Die exakte Positionierung der Einrichtung wird durch die mindestens zwei Passstifte am oberen Ende des Strangpressprofils in dessen Eck- bzw. Randbereichen erreicht, wobei die jeweilige am Tragarm zu befestigende Einrichtung entsprechende Aufnahmeöffnungen für die Passstifte aufweist.

Durch Lösen der Zentralschraube, welche den Tragarm mit der daran befestigten Einrichtung verbindet, und Abziehen dieser Einrichtung, kann diese gegen eine beliebig andere Einrichtung ähnlicher Art ausgetauscht werden.

Besonders vorteilhaft ist, dass der Tragarm aus einem rechteckigen Strangpressprofil besteht. Dieses Strangpressprofil kann beliebig abgelängt werden, um so gewünschte Höhen des Tragarms in Abhängigkeit vom Einsatzzweck und den räumlichen Bedingungen bei der Verwendung des Tragarms mit der daran befestigten Einrichtung realisieren zu können.

Besonders leichtgewichtig und dennoch stabil ist der Tragarm dadurch, dass dieser als Strangpressprofil ausgebildet ist. Dabei kann das Strangpressprofil aus einem metallischen, z.B. Stahl oder Aluminium, oder einem Kunststoffmaterial bestehen. Da das Strangpressprofil einen mittigen Steg aufweist, von dem zu den Eck- bzw. Randbereichen des Tragarms weitere Stege verlaufen, wobei zwischen den Stegen Hohlräume gebildet sind, ist der Tragarm vergleichsweise leicht gegenüber einem solchen aus einem Vollmaterial.

Mit den Mitteln der Shimstechnik können beliebige Anpassungen, insbesondere im Hinblick auf die Maßhaltigkeit, der miteinander zu verbindenden Komponenten vorgenommen werden.

Der der Erfindung zugrunde liegende Gedanke wird in der nachfolgenden Beschreibung anhand eines Ausführungsbeispieles, das in den Zeichnungen dargestellt ist, näher beschrieben. Es zeigen:
- Fig. 1: eine Explosivdarstellung eines erfindungsgemäßen Halte-, Spann- und Positioniersystems mit einer Positioniereinrichtung und einem Drehgelenk,
- Fig. 2: eine Vorderansicht des Halte-, Spann- und Positioniersystems gemäß Fig. 1,
- Fig. 3: eine Seitenansicht des Halte-, Spann- und Positioniersystems gemäß Fig. 1,
- Fig. 4: eine Perspektivansicht des Tragarmabschnittes des Halte-, Spann- und Positioniersystems,
- Fig. 5: eine Explosivdarstellung des Tragarmabschnittes gemäß Fig. 4,
- Fig. 6: eine Explosivdarstellung eines Drehgelenks zur Verwendung am Halte-, Spann- und Positioniersystem,
- Fig. 7: eine Schnittdarstellung des Drehgelenks gemäß Fig. 6,
- Fig. 8: eine Perspektivansicht einer Positioniereinrichtung zur Verwendung am Halte-, Spann- und Positioniersystem und
- Fig. 9: eine Explosivdarstellung der Positioniereinrichtung gemäß Fig. 8.

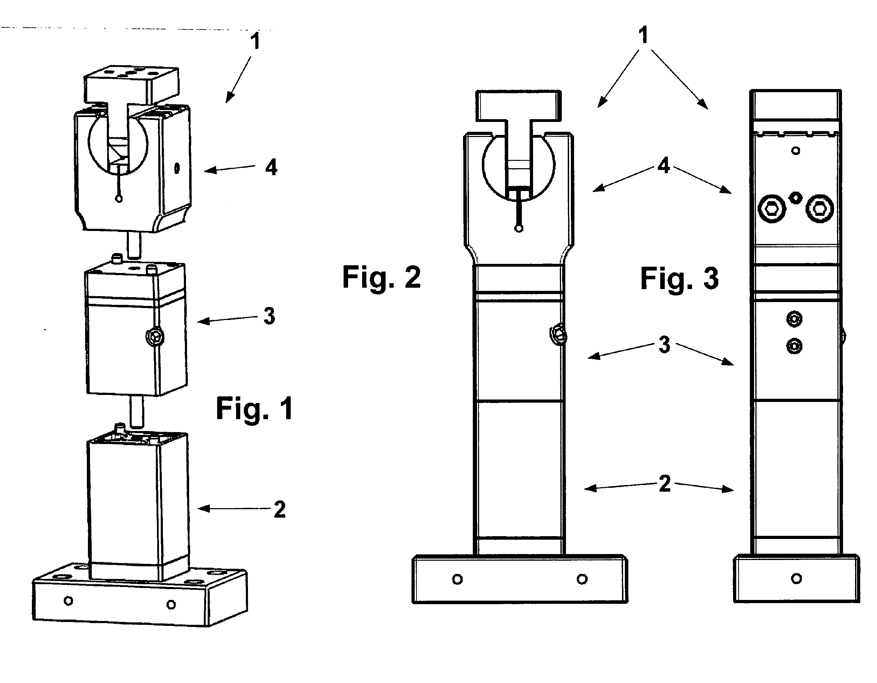

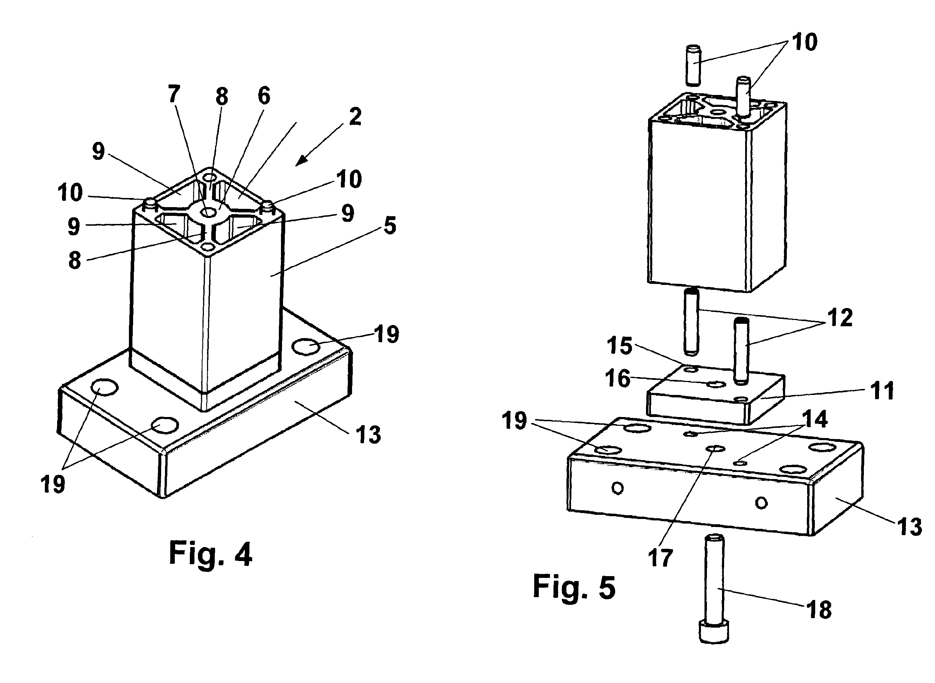

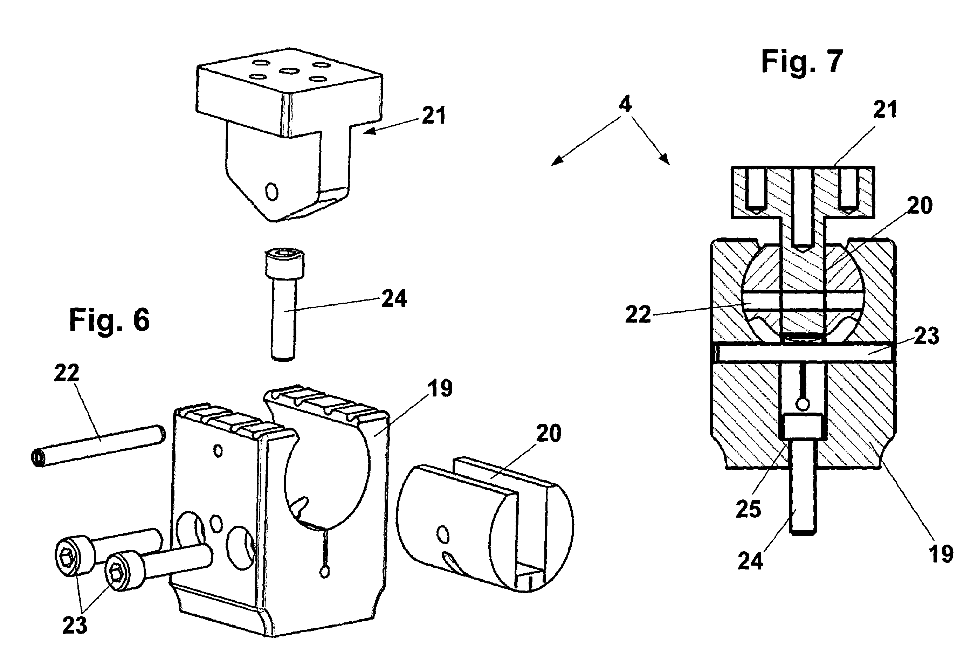

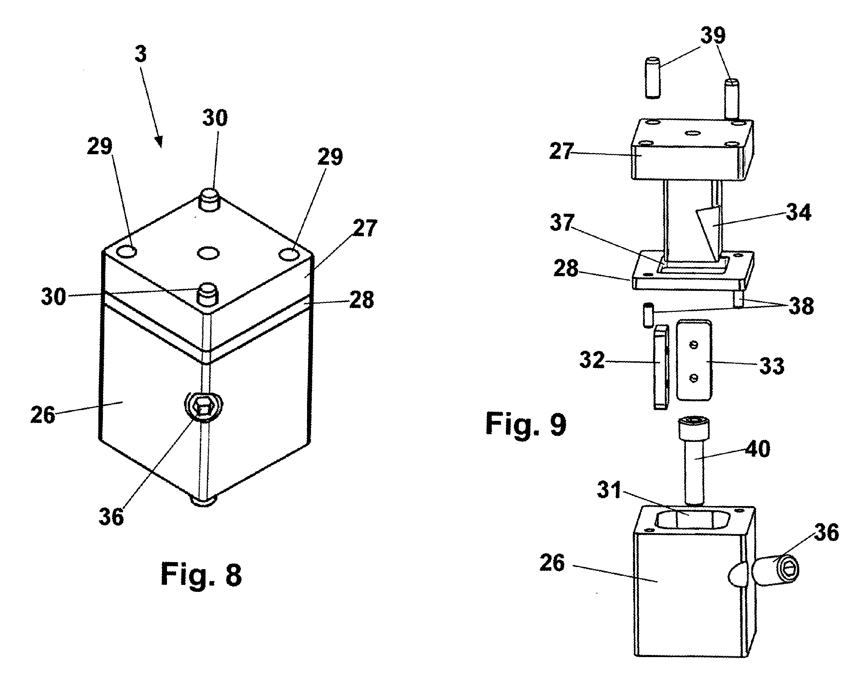

Das in den Fig. 1 bis 3 dargestellte Halte-, Spann- und Positioniersystem ist nach einem modularen Baukastenprinzip aufgebaut. Dem entsprechend kann auf dem Tragarm gemäß den Fig. 4 und 5 ein Drehgelenk gemäß den Fig. 6 und 7, eine Positioniereinrichtung gemäß den Fig. 8 und 9 oder eine beliebige andere Konsole, Halterung, Stativ, Werkstück, Werkzeug oder ähnliche Einrichtung befestigt werden. Gegebenenfalls können auch mehrere solcher Einrichtungen miteinander kombiniert werden, wie dies aus den Fig. 1 bis 3 ersichtlich ist. Insofern ist das Halte-, Spann- und Positioniersystem gemäß den Fig. 1 bis 3 nur als eines von vielen möglichen Ausführungsbeispielen zu betrachten.

Das Halte-, Spann- und Positioniersystem 1, wie es in den Fig. 1 bis 3 dargestellt ist, besteht im Wesentlichen aus einem Tragarm 2, auf dem eine Positioniereinrichtung 3 und auf dieser wiederum ein Drehgelénk 4 befestigt sind.

Wesentlichster Bestandteil des Halte-, Spann- und Positioniersystems 1 ist der in den Fig. 4 und 5 gezeigte Tragarm 2, der aus einem beliebig ablängbaren rechteckigen Strangpressprofil 5 vorzugsweise aus Stahl besteht. Das Strangpressprofil 5 besitzt einen mittigen Steg 6 mit einer zentralen Gewindebohrung 7. Vom Steg 6 führen zu den Eck- bzw. Randbereichen des Strangpressprofils 5 weitere Stege 8. Zwischen den Stegen 6 und 8 sind Hohlräume 9 gebildet. Am oberen Ende des Strangpressprofils 5 sind in dessen Eck- bzw. Randbereichen zwei sich schräg gegenüber befindliche hervorstehende Passstifte 10 eingebracht.

Am unteren Ende des Tragarms 2 ist eine Shimsplatte 11 mittels zwei weiteren Passstiften 12 angeordnet, mit denen die Shimsplatte 11 mit einer Fußplatte 13, wie in Fig. 5 gezeigt, verbunden wird, wobei die Passstifte 12 in entsprechende Bohrungen 14 und 15 in der Fußplatte 13 und in der Shimsplatte 11 führen. Die Shimsplatte 11 und die Fußplatte 13 besitzen jeweils eine mittige Bohrung 16 und 17, durch welche eine Zentralschraube 18 von der Unterseite der Fußplatte 13 geführt wird, wobei der Gewindeteil der Zentralschraube 18 mit der Gewindebohrung 7 im Steg 6 des Strangpressprofils 5 des Tragarms 2 fest verbunden wird. Zur Befestigung der Fußplatte 13 an einer nicht dargestellten Basis weist diese mehrere Durchgangsbohrungen 19 auf.

Die am oberen Ende des Tragarms 2 befindlichen Passstifte 10 dienen der Aufnahme beispielsweise des in den Fig. 6 und 7 dargestellten Drehgelenks 4.

Das Drehgelenk 4 entspricht etwa dem aus der DE 20 2006 000 908 U1. Das Gelenkgehäuse 20 ist über eine Scharniergelenkanordnung 20 mit einem Gerätehalter 21 über einen Stift 22 verbunden, wobei an dem Gerätehalter 21 beispielsweise eine nicht dargestellte Spannvorrichtung zum Halten von Werkstücken befestigbar ist. Die Schrauben 23 verspannen die Scharniergelenkanordnung 20 mit dem Gelenkgehäuse 19. Wie leicht erkennbar ist, erlaubt das Drehgelenk 4 eine Schwenkbewegung des Gerätehalters 21 in zwei Ebenen, nämlich einerseits um die Scharniergelenkanordnung 20 und anderseits um den Stift 22.

Das Drehgelenk 4 wird von oben über eine Zentralschraube 24 und eine entsprechende Durchgangsbohrung 25 mit der Gewindebohrung 7 im Strangpressprofil 5 des Tragarms 2 verspannt.

Die in den Fig. 8 und 9 gezeigte Positioniereinrichtung 3 entspricht etwa der aus der DE 20 2006 016 392 U1. Sie dient insbesondere zum Einstellen mittels Shimstechnik und Spannen eines Werkstückes oder Werkzeuges. Die Positioniereinrichtung 3 umfasst als Hauptbestandteile ein Fußteil 26, ein Flanschteil 27 und eine zwischen diese einbringbare Einstellplatte 28. Das Flanschteil 26 besitzt an seiner Oberseite eine Mehrzahl von Bohrungen 29 und mindestens zwei Passstifte 30 zur Befestigung z.B. eines Werkstückes. Die Positioniervorrichtung 3 hat einen rechteckigen und in den Hauptteilen maßgleichen Querschnitt.

In das Fußteil 26 ist mittig eine rechteckige Öffnung 31 eingebracht. An jeder von zwei rechtwinklig zueinander liegenden inneren Seitenflächen der Öffnung 31 ist jeweils ein Einstellklotz 32 und 33 mittels nicht gezeigten Schrauben befestigt, wobei die Einstellklötze 32 und 33 jeweils eine bestimmte, beliebig wählbare Dicke aufweisen. Gegebenenfalls haben die Einstellklötze 32 und 33 unterschiedliche Dicken. Der eine Einstellklotz 32 erlaubt eine Maßeinstellung zum Verspannen des Werkstückes in X-Richtung und der Einstellklotz 33 in Y-Richtung.

Das Flanschteil 27 hat an seiner Unterseite einen Zapfen 34 angeformt, der eine Form aufweist, die der Öffnung 31 im Fußteil 27 entspricht, jedoch geringere Abmessungen besitzt, also im Durchmesser erheblich kleiner ist als die Öffnung 31 im Fußteil 26. An einem der Eckbereiche ist am Zapfen 34 des Flanschteils 27 eine Einkerbung 35 eingefräst. In diese Einkerbung 35 greift ein am Fußteil 26 eingesetztes Befestigungselement 36, beispielsweise eine Innensechskantschraube, ein, wenn das Flanschteil 27 mit dem Zapfen 34 in das Fußteil 26 eingesetzt wird. Dieses Befestigungselement 36 verspannt das Fußteil 26, das Flanschteil 27 und die Einstellplatte 28 in Relation zu den Einstellklötzen 32, 33 gegeneinander. Hierbei unterstützt die schräge Fläche der Einkerbung 35 die Spannwirkung gegen das Befestigungselement 36.

Zwischen dem Fußteil 26 und dem Flanschteil 27 ist die Einstellplatte 28 angeordnet, deren Dicke vorbestimmt ist und beliebig gewählt werden kann. Diese dient der Maßeinstellung zum Verspannen des Werkstückes in Z-Richtung. Mittig der Einstellplatte 28 ist eine Öffnung 37 eingebracht, die die gleiche Kontur und Größe aufweist, wie die Öffnung 31 im Fußteil 26. Durch diese Öffnung 37 wird der Zapfen 34 des Flanschteils 27 beim Verbinden mit dem Fußteil 26 geführt. Die Einstellplatte 28 kann mittels Passstiften 37 am Fußteil 26 arretiert werden. Ebenso ist das Flanschteil 27 mit Passstiften 38 versehen, um ein beliebig anders Bauteil befestigen zu können.

Das Fußteil 26 der Positioniereinrichtung 3 besitzt eine nicht sichtbare mittige Bohrung, durch welche eine Zentralschraube 40 von oben nach unten geführt wird, wobei der Gewindeteil der Zentralschraube 18 mit der Gewindebohrung 7 im Steg 6 des Strangpressprofils 5 des Tragarms 2 fest verbunden wird.

### Liste der Bezugszeichen

- 1: Halte-, Spann- und Positioniersystem
- 2: Tragarm
- 3: Positioniereinrichtung
- 4: Drehgelenk
- 5: Strangpressprofil
- 6: Steg
- 7: Gewindebohrung
- 8: Steg
- 9: Hohlraum
- 10: Passstift
- 11: Shimsplatte
- 12: Passstift
- 13: Fußplatte
- 14: Bohrung
- 15: Bohrung
- 16: mittige Bohrung
- 17: mittige Bohrung
- 18: Zentralschraube
- 19: Gelenkgehäuse
- 20: Scharniergelenkanordnung
- 21: Gerätehalter
- 22: Stift
- 23: Schraube
- 24: Zentralschraube
- 25: Durchgangsbohrung
- 26: Fußteil
- 27: Flanschteil
- 28: Einstellplatte
- 29: Bohrung
- 30: Passstift
- 31: Öffnung

- 32: Einstellklotz
- 33: Einstellklotz
- 34: Zapfen
- 35: Einkerbung
- 36: Befestigungselement
- 37: Öffnung
- 38: Passstift
- 39: Passstift
- 40: Zentralschraube

## Patentansprüche

1. Halte-, Spann- und Positioniersystem (1) für Geräte, Werkstücke und Werkzeuge, **gekennzeichnet durch** einen mit einer Fußplatte (13) versehenen Tragarm (2), der aus einem beliebig ablängbaren rechteckigen Strangpressprofil (5) besteht, das einen mittigen Steg (6) mit einer zentralen Gewindebohrung (7) aufweist, von dem zu den Eck- bzw. Randbereichen des Strangpressprofils (5) weitere Stege (8) verlaufen, zwischen den Stegen (8) Hohlräume (9) gebildet sind und am oberen Ende des Strangpressprofils (5) in dessen Eck- bzw. Randbereichen mindestens zwei beabstandete und hervorstehende Passstifte (10) eingebracht sind, wobei auf dem oberen Ende des Strangpressprofils (5) eine mit Aufnahmeöffnungen für die Passstifte (10) versehene Positioniereinrichtung (3), Konsole, Halterung, Stativ, Drehgelenk (4) oder ähnliche Einrichtung aufsetzbar und mit einer Zentralschraube (24,40) in der zentralen Gewindebohrung (7) des Tragarms (2) befestigbar ist und diese Einrichtungen gegeneinander austauschbar sind.

2. Halte-, Spann- und Positioniersystem nach Anspruch 1, **dadurch gekennzeichnet, dass** die Stege (6,8) im Innern des Strangpressprofils (5) über dessen gesamte Länge verlaufen.

3. Halte-, Spann- und Positioniersystem nach Anspruch 1, **dadurch gekennzeichnet, dass** zwischen der Fußplatte (13), dem Tragarm (2) und der darauf aufsetzbaren Einrichtung (3,4) Mittel der Shimstechnik, d.h. Metallscheiben oder -platten unterschiedlicher Dicke, einsetzbar sind.

4. Halte-, Spann- und Positioniersystem nach Anspruch 1, **dadurch gekennzeichnet, dass** die Fußplatte (13) mit einer Zentralschraube (18) in der zentralen Gewindebohrung (7) des Tragarms (2) befestigbar ist.
